# EUROPEAN PATENT SPECIFICATION

(11) **EP 1 313 056 B1**
(45) Date of publication and mention of the grant of the patent: **03.11.2004**
(21) Application number: 01945353.9
(22) Date of filing: 26.06.2001
(51) Int. Cl.: G06F 19/00, B63J 4/00, G01F 23/30, B63J 3/00

(54) **SYSTEM FOR DETECTING AND RECORDING DISCHARGES OF WASTE HYDROCARBONS OF A SHIP**
SYSTEM ZUR ERKENNUNG UND AUFZEICHNUNG DES AUSSTOSSES VON ABFALL-KOHLENWASSERSTOFFEN EINES SCHIFFES
SYSTEME DE DETECTION ET D'ENREGISTREMENT DE DECHARGES DE RESIDUS D'HYDROCARBURES JETABLES D'UN BATEAU

(30) Priority: 27.06.2000 ES 200001594
(43) Date of publication of application: 21.05.2003
(73) Proprietor: Rekalde Atela, Josu, 20002 San Sebastian (ES); AROCENA YARZA, Miguel, Angel, E-20002 San Sebastian (ES)
(72) Inventor: AROCENA YARZA, Miguel Angel, E-20002 San Sebastian (ES)
(74) Representative: Carpintero Lopez, Francisco
(86) International application number: PCT/ES2001/000256
(87) International publication number: WO 2002/001475

(56) References cited:
- WO-A1-00/26143
- FR-A1- 2 586 291

## Description

### OBJECT OF THE INVENTION

The present invention relates to a system for detecting discharges of waste hydrocarbons of a ship, applicable for small, medium and large ships as well as oil tankers, allowing a reliable and accurate knowledge of the discharges of waste hydrocarbons of ships whether at sea or in port areas, all of this based on level gauges and a multiparameter recording station in combination with computerized management means established in ports.

The object of the invention is to provide a system that allows port authorities or other competent official organisms to detect in real time any irregular dumping performed during the operation of a ship, whether these are oleous or waste hydrocarbons and cleaning residues from crude oil tanks provided in oil tankers.

### BACKGROUND OF THE INVENTION

It is known that ships in general generate waste or oleous hydrocarbons, while oil tankers in addition generate residues in crude oil storage which comprise a mixture of hydrocarbons, detergents and water and are stored in sludge tanks provided in bilges for discharge in port by the competent authorized organism.

Waste hydrocarbons are also stored in the bilges of ships, so that these contain waste water and oily hydrocarbons which float on the water to form a top layer with a thickness that depends on the volume of such hydrocarbons.

Said mixed oily products are suctioned by a pump which separates the oily hydrocarbons from the water, which is purified to contain a minimal amount of allowed parts per million, with the water discharged to the sea through the ship outlet or discharge pipes. The remaining oily waste hydrocarbons are stored in a tank for later controlled discharge on land by the authorized company in charge of issuing international certificates for controlling discharged volumes of these products or waste oily hydrocarbons in port.

Both when extracting waste oily hydrocarbons or when incorporating new lubrication oil an entry must be made in the "Hydrocarbon Log Book", which includes data corresponding to the number of liters of waste hydrocarbons extracted from the ship, date of the extraction, port of extraction, seal of the corresponding port authority, etc. The same is true for the oil which is incorporated to replace waste oil, so that the log book in question is meant to control the discharge of oily pollutants in order to prevent this discharge from being dumped at sea in an uncontrolled manner.

However, the accuracy of the data recorded in the book depends on the measurement devices present in the storage tanks and bilges for these products or waste hydrocarbons, which accuracy is generally quite low.

If this is added to the fact that the costs of companies in charge of extracting the oily waste hydrocarbons or products are high, it is common for part of the load of tanks or bilges to be irregularly dumped at sea before arriving at the port, and due to the high traffic of ships the total volume of these oily waste products dumped in the sea is currently worryingly large.

In any event, there exists an International Convention approved by the International Maritime Organization meant to control and prevent pollution from ships, in which limits are defined for each maritime area regarding the amount of hydrocarbons that can be dumped at sea during ordinary operations, strictly forbidding discharge of these products in certain areas. Although the enforcement of this convention is quite strict, the fact is that the only controls available to the authorities of each country regarding elimination of waste oily products or hydrocarbons are the following:
1. The "Hydrocarbon Log Book", in which the machinist or competent authority records extraction data for these pollutants and the lubrication oil load, as the amounts eliminated and loaded should be similar. However, this data is inaccurate as the waste hydrocarbon bilges also contain residual water deposited from water pump leaks, purges of hydraulic systems, cleaning of the machine room, etc.
2. Monitoring from the air to locate and penalize ships which perform illegal dumping at sea.

As described above these controls are insufficient, and in fact the amount of waste hydrocarbons dumped directly into the sea is currently significant, as is its consequence, that is, marine pollution.

A similar problem is found with tankers which transport crude oil or hydrocarbons, as these ships must clean their storage tanks periodically, or each time they are emptied.

Specifically, for small and medium sized ships discharge of waste oily hydrocarbons is performed by operating a helical pump which suctions the product from the bilge and sends it to a centrifuge meant to separate water from hydrocarbons, so that this separator detects a minimal number of parts per million of oily products, performs the separation and the water is discharged to the sea through an electro-valve, while a second electro-valve opens to allow the hydrocarbons to pass to a storage collection tank of the ship in its bilge.

If the separator finds that the product does not comply with the minimum requirements for oily products the first electro-valve opens and the entire product is dumped into the sea.

Likewise, oily waste resulting from cleaning crude oil stowage tanks of oil tankers are suctioned by a pump and stored in a sludge tank for later discharge at port.

### DESCRIPTION OF THE INVENTION

The system taught is designed to allow authorities and competent organisms to control discharge of waste hydrocarbons, both for hydrocarbons stored in the bilge of any ship and those in the sludge tank of oil tankers.

More specifically, the system for detecting and recording discharges object of the invention is based on two floating probes placed inside the bilge, one of which floats permanently on the upper layer of oily hydrocarbons while the other floats on the waste water layer, thereby determining the lower level of said hydrocarbons which float on the water.

Additionally, the system can optionally incorporate a third probe used to detect the level of oily hydrocarbons stored in the collection tank for these hydrocarbons after they are separated from the waste water dumped into the sea.

These probes detect the aforementioned levels, which are then entered in a "black box" or multiparameter recording station, which records and stores them together with the corresponding date and time, including any level changes which imply variations in the volume of waste products.

Detecting and recording discharges of sludge from cleaning crude oil tanks in tankers is achieved by placing at the union of the conducts arriving from said crude oil tanks and before the sludge tank where said cleaning residues are stored a flow meter associated to the corresponding suction pump for these residues, so that the values obtained by said flow meter are recorded in the "black box" or multiparameter recording station together with the date and time of the measurement.

Thus, the competent port authority can extract the data from such a multiparameter recording station of any ship and compare them to the entries in the hydrocarbon log book of each ship, in order to discover any uncontrolled dumping, such that the data stored in the multiparameter recording station are collected in the mouth of the mooring of the ship at each port and transmitted by radio to the port captaincy, thereby obtaining information when each ship arrives of the data in the multiparameter recording station, which data can be later checked by the port authority requesting the Hydrocarbon Log Book from the corresponding person on the ship.

Finally, in order to prevent claims of a ship power outage preventing said data control and recording elements from having operated during certain periods, the system is complemented by emergency power means integrated in the multiparameter recording station to ensure a continuous operation for 24 hours.

### DESCRIPTION OF THE DRAWINGS

The present description is complemented by a set of drawings of a preferred embodiment of the invention, which will make clearer the characteristics of the invention and where for purposes of illustration only and in a non-limiting sense the following is shown:
Figure 1 shows a schematic representation of the invention applied to the bilge of a ship.
Figure 2 shows another schematic representation of the part of the system which includes a flow meter meant to measure the waste originated in cleaning the crude oil tanks of an oil tanker.
Figure 3 shows a block diagram of the system for transmitting the data from the multiparameter recording box installed on the ship to the captaincy of a port, through the port mouth.

### PREFERRED EMBODIMENT OF THE INVENTION

In view of the above described figures the system of the invention, applicable to the bilge (1) of a ship containing a volume of waste water (2) and a volume of oily or waste hydrocarbons (3), forming a layer that floats on said volume of waste water (2), comprises as is conventional a helical pump (4) for suctioning the waste product contained in the bilge (1), so that in combination with this pump (4) is provided a separator (5) to separate the waste water from waste hydrocarbons, so that said water is sent by an elector-valve (6) and through a pipe (7) directly to the sea, while waste hydrocarbons obtained in the separator (5) are sent by electro-valve (8) through pipe (9) to a storage tank (10), also communicated to the outside by a pipe (11) with an interposed valve (12).

Based on these characteristics, one of the basic novelties of the system of the invention consists of including a pair of floating probes (13-14), the first of which floats on the layer (3) of waste hydrocarbons which floats on the volume of the waste water layer (2), with this probe (13) defining a detector for the top level of this layer of waste hydrocarbons (3), while the probe (14) floats on the layer of waste water (2), defining a detector for the bottom level of the aforementioned layer (3) of waste hydrocarbons.

These sensors (13-14) with the appropriate technology allow to detect any decrease in the levels of the bilge (1) by determining a decrease in the level of the hydrocarbon layer (3) in a certain period, for which the data acquired by said probes (13-14) are sent to a black box or multiparameter recording station (15) belonging to the ship itself, as are data from a third level probe (16) provided inside the tank (10) for storing waste hydrocarbons obtained at the separator (5).

In this manner two values for the volume of waste hydrocarbons are obtained, an accumulated one for waste hydrocarbons extracted from the bilge (1) and one corresponding to the waste hydrocarbons stored in the tank (10) .

Obviously, the value of these two parameters must agree at all times and must lie within a tolerance range which is not greater than the uncertainty in the entire measurement chain; otherwise it would be apparent that an irregular extraction or dumping of waste hydrocarbon has been performed, which would be recorded in the multiparameter recording station (15) along with the date, time and variation in the hourly interval of the volume of hydrocarbons stored in bilge (1) and tank (10) and the corresponding diagnostic.

Additionally, to detect and record possible dumping of sludge from cleaning of crude oil tanks (17) of a cargo ship or oil tanker, in its corresponding bilge (1) a flow meter (18) has been provided in the pipe (19) at which meet all pipes from the various oil tanks (17), with this flow meter (18) being associated to the corresponding extraction pump (20) that suctions the residues resulting from cleaning said tanks (17), measuring both the volume and flow extracted from any of these tanks (17) so that the data is sent to the black box or multiparameter recording station (15), where they are stored in the same manner as with the data obtained from the probes (13-14-16). These residues resulting from cleaning the tanks (17) are sent to a sludge tank (21) by a discharge pipe (22) with an interposed valve (23).

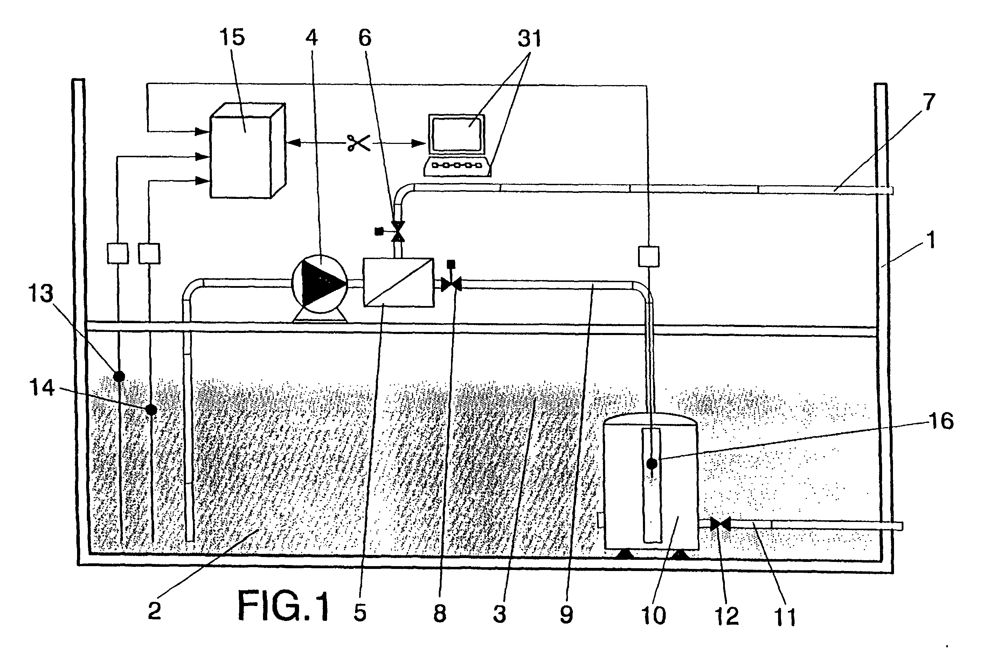

Obviously both the data obtained from the probes (13-14-16) and that obtained from the flow meter (18) are stored with the corresponding date and time so that at the end of the ship's day run said multiparameter recording station (15) provides the competent and authorized authority with the total volume of hydrocarbons (3) extracted from the tank (10) during the day run of the corresponding ship, which amounts must agree with those stored in the corresponding bilge (1) or in tanks (10); otherwise, as explained above, an illegal dumping must have taken place (Fig. 1).

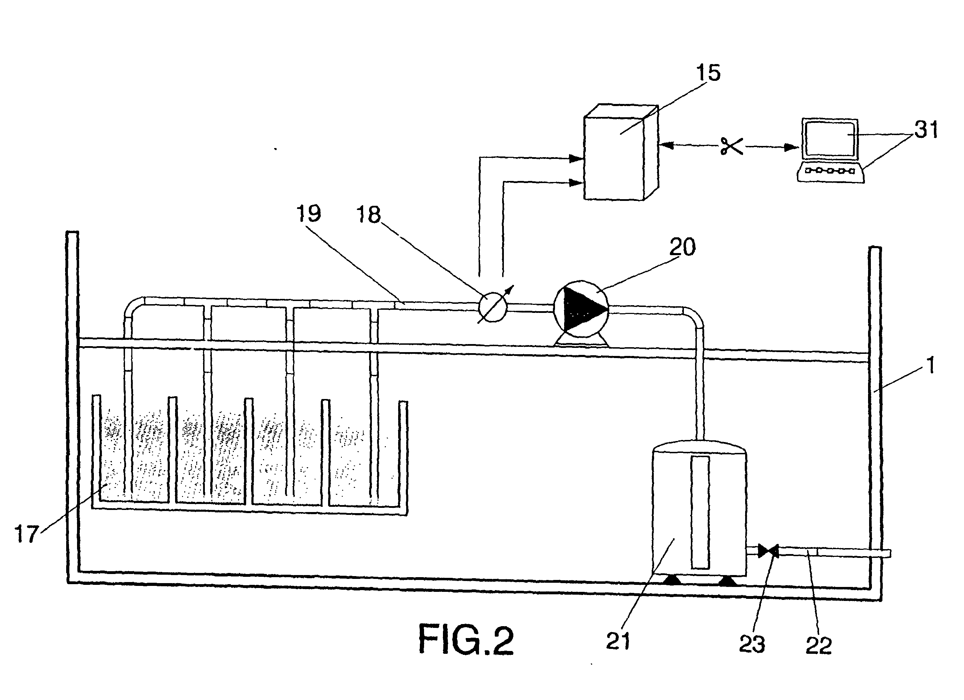

In oil tankers the residues from cleaning the tanks (17) as measured by the flow meter (18) must agree with the amount stored in the sludge tank(s) (21) (Fig. 2).

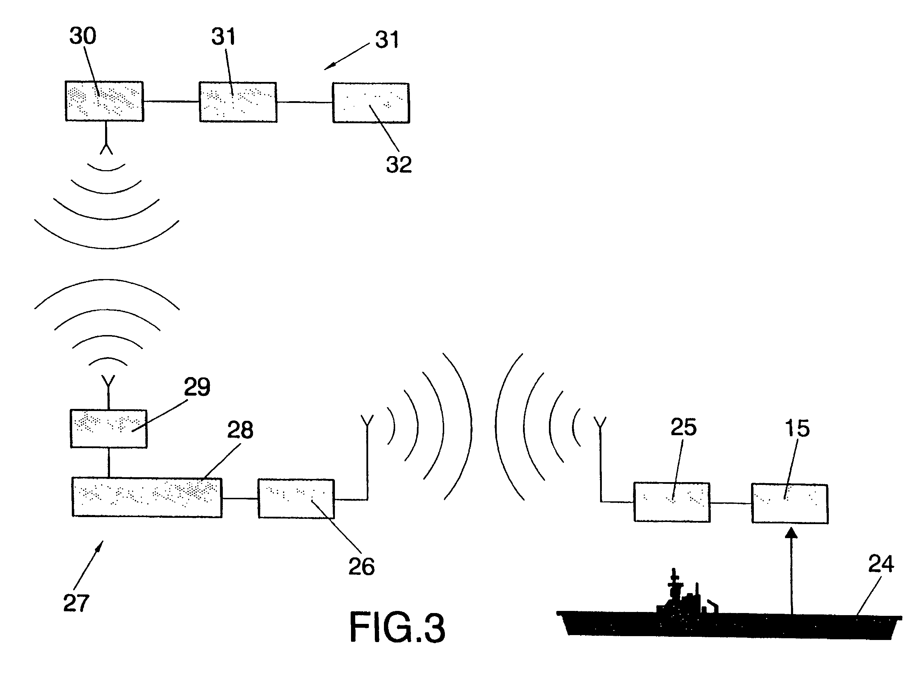

Figure 3 shows the schematic representation of the data transmission process from the multiparameter recording station (15) of the ship (24), which takes place by radio using the radio (25) of the ship (24), emitting the data from the multiparameter recording station (15), which are then collected by a radio emitter (26) provided in the port mouth (27), with a communications control block (28) associated to said radio emitter (26), which using a modem (29) and via radio sends the data to another modem (30) of the port captaincy (31) connected to a computer (31) and a printer (32), so that as soon as the ship docks in port the captaincy will know the data stored in the multiparameter recording station (15), which data can be later checked by the corresponding port authority by demanding the "Hydrocarbon Log Book" from the authority of the ship (24).

In the event of a power failure, whether accidental or intentional, the multiparameter recording station (15) incorporates, integrated in it, an emergency system which ensures its operation for a minimum period of 24 hours, with this status recorded hourly until the conventional power supply is restored.

## Claims

1. System for detecting and recording discharges of waste hydrocarbons of a ship (24), meant to detect and record in real time any irregular dumping which occurs in the run of any ship or oil tanker, both of oily waste hydrocarbons stored in the bilge (1) of ships and/or oil tankers and of residues from cleaning the crude oil tanks of the oil tankers, with these residues stored in the sludge tanks of the ship, **characterized in that** it comprises a pair of floating probes (13-14) placed in the bilge (1) of the ship (24), which probes (13-14) detect the upper level of the layer of oily hydrocarbons (3) and the lower level of said layer of hydrocarbons (3) which floats on the volume of waste water (2) stored in the bilge (1), and **in that** said probes (13-14) are connected to a multiparameter recording station (15) which together with the date and time records and stores the data obtained by said probes (13-14), and allowing by means of a computer system established at a port to know the variations in the volume of oily or waste hydrocarbons contained in the bilge (1).

2. System for detecting and recording discharges of waste hydrocarbons of a ship, as claimed in claim 1, **characterized in that** it includes optionally a third probe (16) to detect the level of oily hydrocarbons stored in a collection tank (10) for the oily hydrocarbons obtained from separating the waste waters, which probe (16) is connected to the multiparameter recording station (15) which together with the date and time records and stores the data obtained by said probe (16), allowing by means of a computer system to know the variations in the volume of oily hydrocarbons contained in said tank (10).

3. System for detecting and recording discharges of waste hydrocarbons of a ship, as claimed in above claims, **characterized in that** it additionally includes a flow meter (18) located in a pipe (19) into which discharge all pipes communicated to the crude oil storage tanks (17) provided in certain oil tankers, with said flow meter (18) associated to a suction pump (20) which suctions the residues resulting from cleaning said crude oil tanks (17) in order to store them in a sludge tank (21); and **in that** said flow meter (18) is connected to the multiparameter recording station (15) which together with the date and time records and stores the data obtained by said flow meter (18), allowing by means of the computer system to know the variations in the volume of residues or sludge contained in the sludge tank (21).

## Patentansprüche

1. System zur Feststellung und Registrierung von Ablässen von Abfallprodukten nicht wiederverwertbarer Kohlenstoffe von einem Schiff (24) aus, das zum Ziel die Feststellung und zeitliche Registrierung jedes nicht regulären Ablasses während der Saison jeden Schiffs und/oder Öltankers hat, sowohl ölhaltige nicht wiederverwertbare Kohlenwasserstoffe, die in dem entsprechenden Kielraum (1) gelagert sind, mit dem die Schiffe und/oder Öltanker ausgestattet sind, als auch Überresste der Reinigungsarbeiten aus den Öltanks der Öltanker selbst, die in Schlämmtanks des Tankers selbst gelagert werden, **dadurch gekennzeichnet, dass** es über zwei Schwimmsonden (13-14) verfügt, die in dem Kielraum (1) des Schiffs oder Tankers (24) angebracht sind und deren Sonden (13-14) das oberste Niveau der ölhaltigen Kohlenwasserstoffschicht (3) entdecken und das unterste Niveau der besagten Kohlenwasserstoffschicht (3), indem sie auf dem Volumen des Abwassers (2) schwimmen, das im Kielraum (1) angesammelt ist und besagte Sonden (13-14) sind mit einer multiparametrischen Registrierstation (15) verbunden, in der zusammen mit dem Datum und der Stunde die Daten registriert werden, die besagte Sonden (13-14) erhalten, wobei eine EDV-Anlage, die im Hafen eingerichtet ist es erlaubt, die Volumenveränderungen der ölhaltigen Kohlenwasserstoffe oder Abwässer, die im Kielraum (1) enthalten sind, zu erkennen.

2. System zur Erkennung und Registrierung von Ablässen von Abfallprodukten nicht wiederverwertbarer Kohlenstoffe eines Schiffs, gemäss Anspruch 1, **dadurch gekennzeichnet, dass** es wahlweise eine dritte Sonde (16) umfasst, die das Niveau der ölhaltigen Kohlenwasserstoffe entdeckt, die in einem Auffangbehälter (10) für besagte ölhaltige Kohlenwasserstoffe mittels Trennung der Abwässer aufgefangen wurden, wobei die besagte Sonde (16) mit der multiparametrischen Registrierstation (15) verbunden ist, in der zusammen mit dem Datum und der Stunde die Daten registriert werden, die besagte Sonde (16) erhält, wobei eine EDV-Anlage, die im Hafen eingerichtet ist es erlaubt, die Volumenveränderungen der ölhaltigen Kohlenwasserstoffe oder Abwässer, die im besagten Lagerbehälter (10) enthalten sind, zu erkennen.

3. System zur Erkennung und Registrierung von Ablässen von Abfallprodukten nicht wiederverwertbarer Kohlenstoffe eines Schiffs, gemäss vorangegangener Ansprüche, **dadurch gekennzeichnet, dass** es ausserdem über einen Durchflussmesser (18) verfügt, der an ein Rohr (19) angeschlossen ist, zu dem alle mit den Tanks (17) zur Lagerung von Rohöl verbundenen Rohre hinlaufen, mit denen bestimmte Öltanker ausgestattet sind, wobei der besagte Durchflussmesser (18) mit einer Ansaugpumpe (20) verbunden ist, die die Abwässer absaugt, die sich aus der Reinigung der besagten Tanks für Rohöl (17) ergeben, um diese in einem Schlämmtank (21) zu lagern; und an besagtem Durchflussmesser (18) ist die multiparametrischen Registrierstation (15) angeschlossen, in der zusammen mit dem Datum und der Stunde die Daten registriert werden, die der Durchflussmesser (18) selbst erhält, wobei eine EDV-Anlage, die im Hafen eingerichtet ist es erlaubt, die Volumenveränderungen der Abwässer oder Schlämme, die im besagten Schlämmtank (21) enthalten sind, zu erkennen.

## Revendications

1. Système de détection et d'enregistrement de déchargements de déchets d'hydrocarbures jetables d'un bateau (24), ayant pour but la détection et l'enregistrement dans le temps de tout déversement irrégulier pendant la campagne de tout bateau et/ou navire pétrolier, aussi bien des hydrocarbures huileux jetables stockés dans la sentine (1) dont sont équipés les bateaux et/ou navires pétroliers, que des déchets de nettoyages résultant des réservoirs de pétrole brut des propres navires pétroliers, lesdits déchets étant stockés dans des réservoirs de stockage de boues du propre navire, **caractérisé en ce qu'**il comprend une paire de sondes flottantes (13-14) disposées dans la sentine (1) du bateau ou navire (24), dont les sondes (13-14) détectent le niveau supérieur de la couche d'hydrocarbures huileux (3) et le niveau inférieur de ladite couche d'hydrocarbures (3) qui flottent sur le volume d'eau jetable (2) stocké dans la sentine (1), et **en ce que** lesdites sondes (13-14) sont connectées à un poste d'enregistrement multiparamétrique (15) dans lequel on enregistre et on stocke, conjointement avec la date et l'heure, les données obtenues par lesdites sondes (13-14), en permettant au moyen d'un équipement informatique établi au port, de connaître les variations de volume des hydrocarbures huileux ou jetables contenus dans la sentine (1).

2. Système de détection et d'enregistrement de déchargements de déchets d'hydrocarbures jetables d'un bateau, selon la revendication 1, **caractérisé en ce qu'**il inclut, optionnellement, une troisième sonde (16) de détection du niveau des hydrocarbures huileux stockés dans un réservoir (10) de réception desdits hydrocarbures huileux obtenus par séparation des eaux de déchet, ladite sonde (16) étant connectée au poste d'enregistrement multiparamétrique (15) dans lequel on enregistre et on stocke, conjointement avec la date et l'heure, les données obtenues par ladite sonde (16), en permettant au moyen d'un équipement informatique de connaître les variations de volume des hydrocarbures huileux contenus dans ledit réservoir de stockage (10).

3. Système de détection et d'enregistrement de déchargements de déchets d'hydrocarbures jetables d'un bateau, selon les revendications précédentes, **caractérisé en ce qu'**il inclut, outre, un débitmètre (18) connecté à une conduite (19) dans laquelle débouchent toutes les conduites en communication avec les réservoirs (17) de stockage de pétrole brut dont sont équipés certains navires pétroliers, ledit débitmètre (18) étant associé à une pompe d'aspiration (20) qui aspire les déchets résultant du nettoyage desdits réservoirs de pétrole brut (17), pour les stocker dans un réservoir de boues (21) et **en ce que** ledit débitmètre (18) est connecté au poste d'enregistrement multiparamétrique (15) dans lequel on enregistre et on stocke, conjointement avec la date et l'heure, les données obtenues par le propre débitmètre (18), en permettant au moyen de l'équipement informatique de connaître les variations de volume des déchets ou des boues contenus dans le réservoir de boues. (21)
